# EUROPEAN PATENT SPECIFICATION

(11) **EP 4 440 096 B1**
(45) Date of publication and mention of the grant of the patent: **31.12.2025**
(21) Application number: 24166096.8
(22) Date of filing: 26.03.2024
(51) Int. Cl.: H04N 1/40, G06T 7/10

(54) **IMAGE SOURCE DETERMINATION METHOD AND APPARATUS THEREOF, ELECTRONIC DEVICE, AND STORAGE MEDIUM**
VERFAHREN UND VORRICHTUNG ZUR BESTIMMUNG EINER BILDQUELLE, ELEKTRONISCHE VORRICHTUNG UND SPEICHERMEDIUM
PROCÉDÉ DE DÉTERMINATION DE SOURCE D'IMAGE ET APPAREIL ASSOCIÉ, DISPOSITIF ÉLECTRONIQUE ET SUPPORT D'INFORMATIONS

(30) Priority: 29.03.2023 CN 202310324163; 11.03.2024 CN 202410274955
(43) Date of publication of application: 02.10.2024
(73) Proprietor: Zhuhai Pantum Electronics Co., Ltd., Zhuhai, Guangdong (CN)
(72) Inventor: HUANG, Tianhui, Zhuhai (CN)
(74) Representative: Sun, Yiming

(56) References cited:
- EP-A2- 1 296 513
- EP-A2- 2 645 304
- US-A1- 2008 205 751

## Description

### TECHNICAL FIELD

The present invention generally relates to the field of image-processing technology and, more particularly, relates to an image source determination method and an apparatus thereof, an electronic device, and a storage medium.

### BACKGROUND

In the existing technology, in order to remove color edges of images, electronic images may be processed together. Electronic images may be generated according to a scanning manner and a digital manner according to their sources. The images generated through the scanning manner have color edges, which may affect the effect of black text and black lines, so that the images generated through the scanning manner need to be processed. The images generated through the digital manner do not have color edges, so that the images generated through the digital manner do not need to be processed. Therefore, existing unified processing manners of electronic images may affect image-processing efficiency and quality; and image-processing efficiency needs to be improved. EP 1 296 513 A2 discloses an image processing apparatus capable of extracting a to-be-extracted target image portion included in an image targeted for processing, which is designed to prevent certain documents from being illicitly copied.

### SUMMARY

One aspect of the present invention provides an image source determination method. The image source determination method includes selecting at least a portion of a target image as a target region; when the target region is a valid region, extracting edge pixels in the target region; and determining a generation source of the target image according to a quantity of chromas of the edge pixels in the target region.

Another aspect of the present invention provides an image source determination apparatus. The image source determination apparatus includes a memory storing program instructions; and a processor communicatively coupled to the memory and, when the program instructions being executed, configured to select at least a portion of a target image as a target region; when the target region is a valid region, extract edge pixels in the target region; and determine a generation source of the target image according to a quantity of chromas of the edge pixels in the target region.

Another aspect of the present invention provides a non-transitory computer-readable storage medium containing a stored program, that when being executed, causes a device where the non-transitory computer-readable storage medium is located to execute an image source determination method. The method includes selecting at least a portion of a target image as a target region; when the target region is a valid region, extracting edge pixels in the target region; and determining a generation source of the target image according to a quantity of chromas of the edge pixels in the target region.

Other aspects of the present invention may be understood by those skilled in the art in light of the description, the claims, and the drawings of the present invention.

### BRIEF DESCRIPTION OF THE DRAWINGS

To clearly describe technical solutions of various embodiments of the present invention, the drawings which need to be used for describing various embodiments are described below. Obviously, the drawings in the following description are merely some embodiments of the present invention. For those skilled in the art, other drawings may be obtained in accordance with the drawings without creative efforts.
FIG. 1 illustrates a schematic of an exemplary scanner including a contact image sensor.
FIG. 2(a) illustrates an image generated through a digital generation manner provided by exemplary embodiments of the present invention.
FIG. 2(b) illustrates an image generated through an analog signal of a contact image sensor provided by exemplary embodiments of the present invention.
FIG. 3 illustrates a flowchart of an image source determination method provided by exemplary embodiments of the present invention.
FIG. 4(a) illustrates a schematic of target image blocks provided by exemplary embodiments of the present invention.
FIG. 4(b) illustrates another schematic of target image blocks provided by exemplary embodiments of the present invention.
FIG. 5(a) illustrates a histogram of a text region of an image generated through a scanning manner provided by exemplary embodiments of the present invention.
FIG. 5(b) illustrates a histogram of a text region of an image generated through a digital manner provided by exemplary embodiments of the present invention.
FIG. 5(c) illustrates a histogram of a background region of an image provided by exemplary embodiments of the present invention.
FIG. 6 illustrates another flowchart of an image source determination method provided by exemplary embodiments of the present invention.
FIG. 7 illustrates a schematic of an image source determination apparatus provided by exemplary embodiments of the present invention.
FIG. 8 illustrates a structural schematic of an electronic device provided by exemplary embodiments of the present invention.

### DETAILED DESCRIPTION

In order to better understand the technical solutions of the present invention, embodiments of the present invention are described in detail below with reference to accompanying drawings.

A contact image sensor (CIS) is a photoelectric conversion device. An integrated module and light-emitting diodes (LEDs) are disposed in the CIS. The CIS can be configured to optically scan documents and read image data.

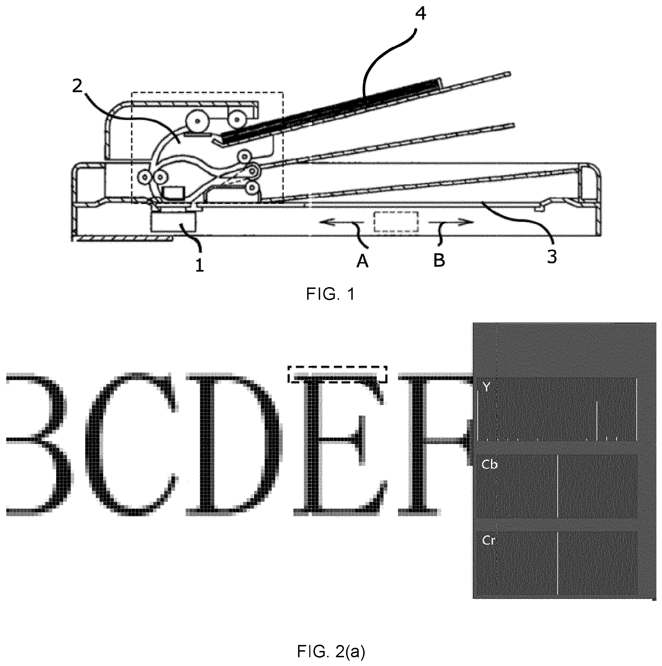

FIG. 1 illustrates a schematic of an exemplary scanner including a contact image sensor with light sources. Referring to FIG. 1, a scanner may include a CIS 1 (with light sources), an auto document feeder (ADF) 2, a flatbed (FB) 3 and an original manuscript 4 (to be scanned). The scanner (e.g., multi-functional peripheral (MFP)) may include an ADF scanning manner and a FB scanning manner. For the ADF scanning manner, original manuscript 4 may enter the inside of the scanner through the ADF 2. At this point, the CIS 1 (with light sources) may be fixed, original manuscript may pass through the working area of the CIS 1 (with light sources) at a constant speed, thereby achieving full-frame scanning of original manuscript. For the FB scanning manner, a user may place original manuscript on the FB 3 (original manuscript placed on the FB 3 is not shown in FIG. 1); and the CIS 1 (with light sources) may move at a constant speed along a direction A or a direction B to perform scanning, thereby achieving full-frame scanning of original manuscript. It should be noted that the direction A is a forward direction, and the direction B is a returning direction.

The FB scanning manner is taken as an example to further illustrate scanning principle. The CIS 1 (with light sources) of the scanner may move at a constant speed along the direction A or the direction B. Every time a distance of one pixel width is moved, R/G/B lights in the CIS 1 (with light sources) may be turned on in sequence for one time. The CIS 1 (with light sources) may receive R/G/B light reflection signals in sequence, convert optical signals into analog electrical signals, and then convert the analog electrical signals into digital electrical signals. During the movement of the CIS 1 (with light sources), a controller (not shown in FIG. 1) of the scanner may also start recording image simultaneously to form a scanned image. However, turn-on operation time points of the R/G/B lights may be difficult to synchronize with each other (i.e., difficult for the R/G/B lights to be turned on simultaneously), which may result in difficult synchronization of the turn-on operation time points of R/G/B lights and the time points for the controller to record R/G/B scanning data, thereby causing delay in the R/G/B scanning time points. Therefore, the text or lines obtained by the scanning manner may have obvious color edges. It should be noted that the sensor and the light sources are integrated into the CIS 1 (with light sources) in FIG. 1.

For an implementation manner in the existing technology, a controller signal may instruct a scanning motor to be turn-on; and after the scanning motor is turned on, the CIS 1 (with light sources) may move to the right direction (i.e., the direction A in FIG. 1), thereby reading the image data of the document (manuscript). When the motor is turned on to drive the CIS 1 (with light sources) to move row by row, the controller may obtain image data simultaneously. However, it is difficult to synchronize the turn-on operation time points of the R/G/B diodes in the CIS 1 (with light sources), which may result in difficult synchronization of the R/G/B scanning time points and the time points for the controller to record R/G/B data, thereby causing delay in the R/G/B scanning time points. Therefore, the text or lines obtained by the scanning manner may have obvious color edges.

In another implementation manner in the existing technology, the user may use a terminal (such as a mobile phone) to capture photos to simulate the scanning process. However, even if the file being captured is a black and white file, captured image may still have color edges due to factors such as ambient light, shadows, reflected light from surrounding objects, features of the camera itself, and/or the like.

In order to facilitate understanding of FIGS. 2(a)-2(b), the statistical objects and statistical display rules of three histograms on the right side of FIGS. 2(a)-2(b), are described hereinafter.

The statistical object corresponding to the first histogram on the right side in FIGS. 2(a)-2(b), is brightness (or lightness). The length of each line block in the brightness is positively related to the quantity of pixels under such brightness value.

In other words, one line block in the brightness statistics result corresponds to one brightness value. The longer the line block is, the more pixels under such brightness value are. "Y" shown in FIGS. 2(a)-2(b), represents the brightness component in a YCbCr space. It may be understood that if the Lab color space is used, "L" may also be configured as the statistical object of the brightness histogram.

The statistical object corresponding to the second histogram on the right in FIGS. 2(a)-2(b), is the Cb value. The length of each line block in the Cb value statistical result is positively related to the quantity of pixels under the Cb value. In other words, one line block in the Cb value statistical result corresponds to one Cb value. The longer the line block is, the more pixels under the Cb value are.

The statistical object corresponding to the third histogram on the right in FIGS. 2(a)-2(b), is the Cr value. The length of each line block in Cr value statistical result is positively related to the quantity of pixels under the Cr value. In other words, one line block in the Cr value statistical result corresponds to one Cr value. The longer the line block is, the more pixels under that Cr value are. It may be understood that if the Lab color space is used, histogram statistics may also be performed on a and b to replace Cb and Cr respectively. It may be understood that the YCbCr space is exemplarily used in drawings of embodiments of the present invention, and histograms of other color spaces may also be used for statistics, which may not be limited in the present invention.

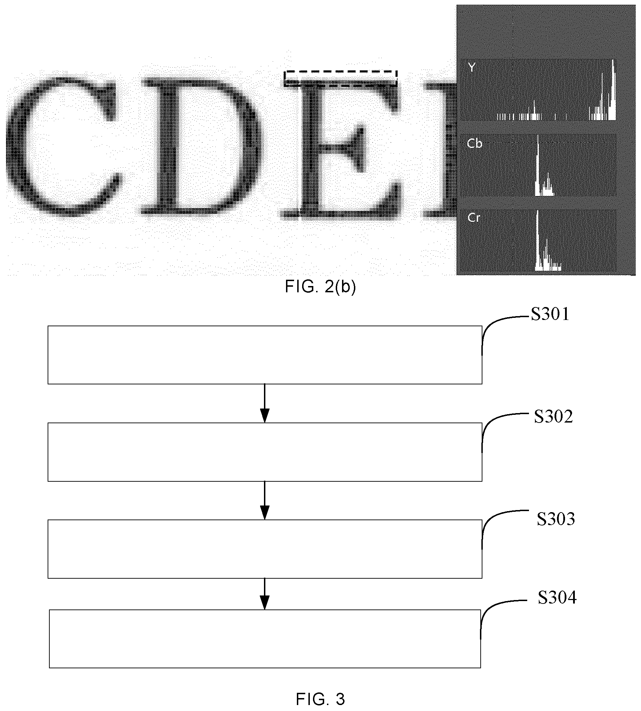

Exemplarily, the image generated through the scanning manner refers to FIG. 2(b). It may be seen that the Cb values and the Cr values of the image generated through the scanning manner are distributed within a certain interval, which may be embodied in color edge pixels in the image. Therefore, additional processing of the images generated through the scanning manner may be performed. The processing manner may include, but may not be limited to, removing the color edges of the image, or performing other types of image enhancement or image optimization.

A common manner used by those skilled in the art may be to directly process the inputted images without distinguishing the image sources. That is, a same optimization process may be performed regardless of whether the images are obtained by the scanning manner.

However, FIG. 2(a) illustrates the image generated through the digital generation manner. It may be seen that the Cb values and the Cr values of the edge pixels of the image generated through the digital manner are unique. That is, there are no color edge pixels in image generated through the digital manner, and the image may not need to be processed. Therefore, the image-processing efficiency may need to be improved.

In order to improve the efficiency of subsequent image-processing, the present disclosure provides the following method to determine image sources. For example, the chromaticity of the edge pixels of the image may be configured to determine image sources. If the image determines to be generated through the digital manner, no subsequent processing of the image may be needed. If the image determines to be generated through the scanning manner, the image may need to be processed subsequently.

In order to determine the image source, referring to FIG. 3, FIG. 3 illustrates a flowchart of an image source determination method provided by exemplary embodiments of the present invention. The image source determination method may include following exemplary steps.

At S301, at least a portion of a target image is selected as a target region.

At above-mentioned step S301, the target region may be determined in the following manner: the image may be divided into blocks, and at least one block may be selected as the target region.

Optionally, the image may be divided into blocks, and a plurality of image blocks may be selected. Selected image blocks may be arranged to be non-adjacent in the image. For example, at least a preset quantity of image blocks in the plurality of image blocks may be not adjacent to each other. In such way, the accuracy of image source identification may be increased.

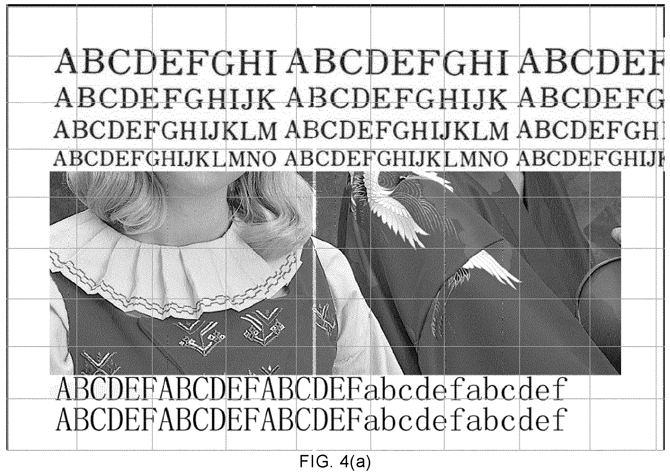

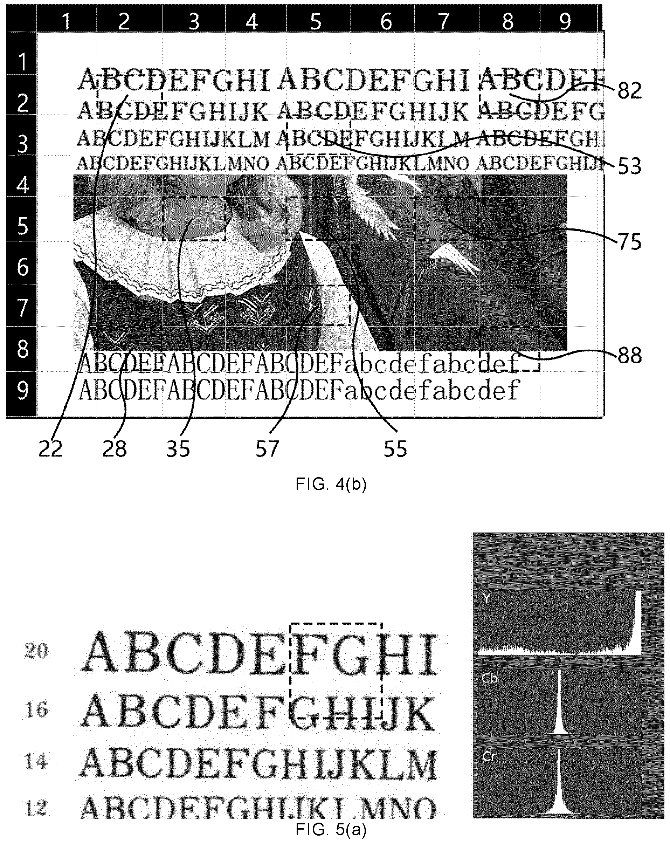

Exemplarily, FIG. 4(a) illustrates a schematic of target image blocks provided by exemplary embodiments of the present invention. Referring to FIG. 4(a), the target image may be divided into 9*9 blocks. Referring to FIGS. 4(a)-4(b), regions (shown in dashed line boxes) numbered 22, 28, 53, 55, 75, 82 and 88 are selected as target regions. It should be understood that the target region may also be selected through other manners. For example, a coordinate range inputted by the user may be configured as selected target region, or an existing image identification algorithm may be configured to select a pure text region that does not contain image as selected target region.

At S302, when the selected target region is a valid region, edge pixels in the selected target region are extracted.

In above-mentioned step S302, the following manner may be configured to determine whether the selected target region is a valid region. Whether the selected target region satisfies a preset condition may be determined. If the present condition is satisfied, the target region may be a valid region; and if the present condition is not satisfied, the target region may be an invalid region. The preset condition may include whether there are edge pixels in the selected target region, and whether the proportion of black pixels and white pixels in the edge pixels is greater than the third preset value.

It should be noted that, taking 8-bit image data as an example, the identification of black/white pixels may be a range, not necessarily a point value. That is, any pixels within a certain range may be considered black/white pixels. For example, pixels with the pixel gray value or brightness value of 0 to 20 may be identified as black pixels, and pixels with the pixel gray value or brightness value of 235 to 255 may be identified as white pixels. The color of the text or background in the target image may deviate slightly from the standard black or white. In order to enhance the identification accuracy, pixels within a certain value range may be identified as black or white pixels.

According to above-mentioned background, the user may input the target image, but the target image inputted by the user may contain objects such as colored picture, and color edges may also be identified from these objects, which may affect the detection accuracy. Therefore, a region with high proportion of black pixels and white pixels may need to be selected as the valid region; that is, the valid region may be more likely to be a region dominated by black characters and white background. In an optional implementation manner, target regions with possible pictures may be excluded through the difference features between the brightness histogram of the target region and the brightness histogram of the text region.

Furthermore, the proportion of black pixels and white pixels in the target region may be determined according to the brightness feature of the target region. If the proportion of one color (black or white) is extremely high or low, it indicates that the target region is close to a pure color region, which may not be beneficial for obtaining accurate identification result in subsequent steps, and such region may need to be excluded.

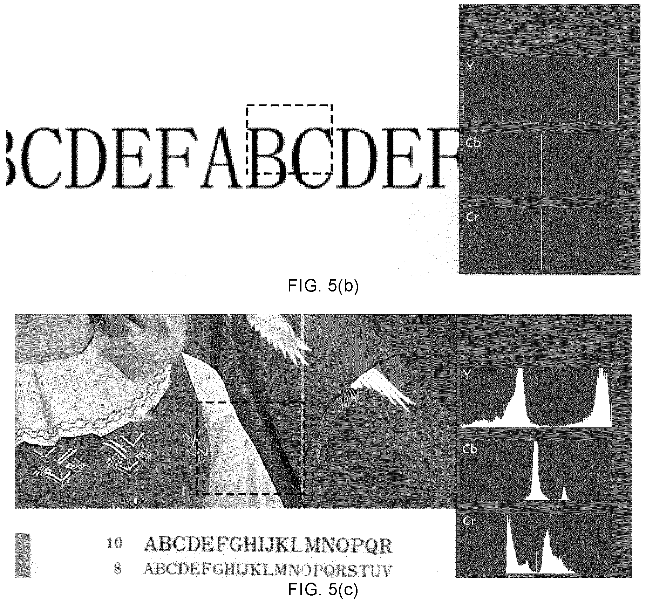

Referring to FIGS. 5(a)-5(c), FIG. 5(a) illustrates a histogram of the text region of the image generated through the scanning manner provided by exemplary embodiments of the present invention; FIG. 5(b) illustrates a histogram of the text region of the image generated through the digital manner provided by exemplary embodiments of the present invention; and FIG. 5(c) illustrates a histogram of a region of a background image provided by exemplary embodiments of the present invention. It should be noted that FIGS. 5(a)-5(c) also illustrate three histograms respectively, which are the brightness histogram, the Cb component histogram and the Cr component histogram of each image. The statistical objects and statistical display rules corresponding to three histograms herein may be consistent with FIGS. 2(a)-2(b), which may not be described in detail herein. It should be noted that the histograms are respectively generated from the regions indicated by the dashed line boxes in FIGS. 5(a), 5(b) and 5(c).

It may be seen from the brightness histograms that the region brightness histogram of the background image may be irregular, and overall distribution of the background image may be more uniform than the brightness histogram of the black and white background text; comparatively, the brightness values of the brightness histogram of the text region may be relatively concentrated. That is, the proportion of the quantity of black pixels and white pixels in the target region to the quantity of all pixels in the target region may be relatively large. Therefore, the brightness feature in the target region may be configured as the basis for determination; and blocks that do not satisfy the condition in the target region may be excluded.

For example, the brightness feature of the target region may be determined according to the statistical result of the brightness histogram of the target region. The statistical result of the brightness histogram of the target region may include Num1 configured to indicate the quantity of black pixels in the target region, Num2 configured to indicate the quantity of white pixels in the target region, and Num3 configured to indicate the quantity of all pixels in the target region. Determining whether the proportion of black pixels and white pixels in the edge pixels of the target region is greater than the third preset value may include determining whether the ratio of the sum of Num1 and Num2 to Num3 is greater than the fourth preset value. If the ratio of the sum of Num1 and Num2 to Num3 is greater than the fourth preset value, the proportion of black pixels and white pixels in the pixels in the target region may be determined to be greater than the third preset value.

Furthermore, it is assumed that the fourth preset value is configured to be 0.75, when the ratio of the sum of Num1 and Num2 to Num3 is greater than 0.75, the proportion of black pixels and white pixels in the target region may be determined to be greater than the third preset value.

At S303, the quantity of chromas of the edge pixels is compared with the first preset value.

It should be understood that an edge extraction algorithm (operation) may be configured to extract the edge pixels in the target region, and the edge extraction algorithms may include a Sobel algorithm, a convolutional neural network algorithm, or other algorithms. In addition, any algorithms configured to extract edge pixels in existing and future technologies should also be included in the protection scope of the present disclosure, which may not be limited herein.

In an optional implementation manner, the first preset value may be determined according to the background color and the foreground color of the target image, where the foreground color may include character color. For example, it is assumed that the character color is black and the background color is white, that is, the quantity of chromas of Cb and Cr may be both 1, the first preset value may be configured to be 2. At this point, if the sum of the quantities of chromas of Cb and Cr is greater than 2, it indicates that the edge pixels may have other colors, which further indicates that color edges may be in the target region. It should be understood that as the features of the background color and the foreground color are different, the first preset value may also be set as other values to obtain accurate identification result.

At S304, the generation source of the target image may be determined using the comparison result by comparing the quantity of chromas of the edge pixels with the first preset value.

In an optional implementation manner, the statistical result of the CbCr chromaticity histogram of the edge pixels may be configured to determine the quantity of chromas of the edge pixels. For example, the statistical result of the CbCr chromaticity histogram of the edge pixels may include the NumCb value statistical result and/or the NumCr value statistical result. That is, the quantity of chromas of the edge pixels may be the sum of the statistical result of the NumCb value and the statistical result of the NumCr value and may also be only the statistical result of the NumCb value or only the statistical result of the NumCr value. For example, the color pixels in the edge pixels may be determined to include both the Cb component and the Cr component, the NumCb statistical result and the NumCr statistical result may be added as the statistical result of the CbCr chromaticity histogram. If the Cb component of the color pixels in the edge pixels determines to contribute more to identification accuracy, only the statistical result of NumCb may be configured as the statistical result of the CbCr chromaticity histogram. If the Cr component of the color pixels in the edge pixels determines to contribute more to identification accuracy, only the statistical result of NumCr may be configured as the statistical result of the CbCr chromaticity histogram.

The NumCb value statistical result may be configured to indicate the quantity of Cb values in the CbCr chromaticity histogram of the edge pixels; and the NumCr value statistical result may be configured to indicate the quantity of Cr values in the CbCr chromaticity histogram of the edge pixels. NumCb or NumCr may not be numerically equal to the quantity of Cb values or Cr values in the CbCr chromaticity histogram. For example, in order to reduce the influence of extreme values on the identification result, the extreme values in the CbCr chromaticity histogram may be ignored. Or NumCb or NumCr may be obtained by converting the data in the CbCr histogram through a specific algorithm. For example, in order to ensure the accuracy of the identification result, multiple values similar Cb or Cr values may be identified as one chroma.

Since the colors including black, white and neutral gray do not have Cb or Cr components, the Cb values and Cr values of black, white and neutral gray may all be the intermediate value 128 (it is assumed that the target image has a 256-level color level). That is, an image containing only black, white, and neutral gray may contain only one Cb value and one Cr value. That is, NumCb corresponding to the image determines as NumCb=1, and NumCr corresponding to the image determines as NumCr=1. If the quantity of chromas is defined as the sum of NumCb and NumCr, the quantity of chromas at this point is 2.

Referring to the second histogram and the third histogram on the right side in FIG. 2(a), the Cb value statistical result and the Cr value statistical result of the edge pixels of the image generated through the digital manner may each be displayed as a single line, which indicates that the Cb value and Cr value are unique. In FIG. 2(b), the Cb value statistical result and the Cr value statistical result of the edge pixels of the image generated through the scanning manner may each be displayed as multiple lines. It should be noted that the histograms are respectively generated from the regions indicated by the dashed line boxes in FIGS. 2(a) and 2(b).

In another optional implementation manner, gradient calculation may be performed on the chromaticity channels of the edge pixels in the target region. If a difference is between gradients of the chromaticity channels of an edge pixel and a corresponding adjacent pixel, it indicates that there are two or more chromas in the target region, thereby further indicating that the target image is an image obtained by the scanning manner. For example, an edge pixel set may be first obtained; 8 surrounding pixels for each edge pixel may be then obtained; and after excluding the white background pixels, the pixel values of the Cb channel and the Cr channel of the edge pixels may be subtracted with 128 to determine whether there are non-zero values. If the non-zero value obtained by such manner for the edge pixels in the set exceeds a certain value, the image may be determined to be the image obtained through the scanning manner. For another example, the edge pixel set may be first obtained; 8 surrounding pixels for each edge pixel may be then obtained, after excluding the white background pixels, the pixel values of the Cb channel and the Cr channel of the edge pixel may be subtracted with 128 (or may be subtracted with the background color Cb\Cr value) to determine whether there are non-zero values. If the non-zero value obtained by such manner for the edge pixels in the set exceeds a certain value, the image may be determined to be the image obtained through the scanning manner.

In some embodiments, the first preset value may be configured in the following manner. When one of the background color and the foreground color is black and another one of the background color and the foreground color is white, the first preset value may be 2, 3 or 4.

Furthermore, the first preset value may be configured in the following manner. When one of the background color and the foreground color is black and another one of the background color and the foreground color is white, since the Cb and Cr values of black and white are all 128, the generated image may not contain other colors if the image is generated through the digital manner. Therefore, correspondingly, NumCb=1, NumCr=1, and the quantity of chromas may be 2, such that the first preset value may be configured to be 2.

In some embodiments, it is assumed that in addition to black and white, another single color may be in the target image, and the Cb or Cr value of such single color may be 128.

That is, when the Cb or Cr values of black and white are same, the first preset value may be configured to be 3. If the Cb and Cr values of such single color are different and are not 128, the first preset value may be configured to be 4.

In some embodiments, the first preset value may be configured in the following manner. When one of the background color and the foreground color is a single color with a color deviation from black within a preset range, and another one of the background color and the foreground color is a single color with a color deviation from white within a preset range, the first preset value may be configured to be 4.

In above-mentioned step S304, determining the generation source of the target image according to the comparison result may include determining whether the quantity of chromas of each target region is less than the first preset value. If the quantity of chromas of each target region is less than the first preset value, the generation source of the image may be determined to be the digital generation manner. It should be understood that the digital generation manner may include generation through processors of computers, mobile phones and the like. And/or if the quantity of chromas of each target region is not less than the first preset value, the generation source of the target image may be determined to be the scanning generation manner. The scanning generation manner may include generation through devices such as cameras, scanners and the like according to optical image-formation.

In some scenarios, users may capture photos of the documents through the terminal and process the photos into images similar to scanned documents through affine transformation. Images processed in such manner may also have color edges. The terminal may be an electronic device with a built-in photo-capturing device, such as a mobile phone, a tablet, a camera or the like; and may also be another electronic device capable of being connected to a photo-capturing device, such as a computer. The source of the target image in such scenario may be also generated through the scanning manner.

The quantity of target regions may be one or more. For example, it is assumed that the quantity of selected target regions is 7, and the quantity of chromas of any one of seven target regions is greater than the first preset value, it determines that the target image may be generated through the scanning manner; and if the quantity of chromas of each of seven target regions is less than the first preset value, it determines that the target image may be generated through the digital manner. In one embodiment, it may only determine whether the target image is generated through the digital manner, or whether the target image is generated through the scanning manner, or whether the target image is generated through the digital manner or the scanning manner.

In some embodiments, when the selected target region is an invalid region, at least a portion of other regions in the target image that have not been selected may be selected as new target regions. That is, invalid regions may be in the target regions selected in one embodiment. It is assumed that the quantity of selected target regions is 7, and invalid regions may be in the seven target regions, such that edge pixels may not be extracted from the seven target regions, and the source of the target image may not be determined by using the quantity of chromas of the edge pixels. Therefore, to accurately determine the generation source of the image, a portion of other regions in the target image that have not been selected may be selected as new target regions.

In some embodiments, a quantity of target regions may be more than one; and at this point, the following scenarios may exist. At the first scenario, the quantity of valid regions in the target regions reaches the preset value, that is, the sampling may be sufficient and subsequent processing may be performed. At the second scenario, the quantity of valid regions in the target regions does not reach the preset value, that is, sampling may be insufficient and additional sampling may be required. At the third scenario, the quantity of valid regions in the target regions does not reach the preset value, additional sampling may be required, and the quantity of valid regions after multiple samplings has not yet reached the preset value. The processing strategies for above-mentioned three scenarios are described hereinafter.

According to present invention, for the first scenario, when the plurality of target regions is more than one and the quantity of valid regions in the target regions exceeds the preset value, extracting the edge pixels in the target regions is performed. That is, if the sampling is sufficient, the edge pixels are extracted normally from the target regions.

For the second scenario, when the quantity of target regions is more than one and the quantity of valid regions in the target regions does not exceed the preset value, at least a portion of other regions in the target image that have not been selected is selected as new target regions until the quantity of valid regions in the target regions exceeds the preset value. That is, when the quantity of valid regions is insufficient, sampling is performed again from unselected regions in the target image until the quantity of valid regions selected by such manner satisfies the preset value, which ensures that a program may sufficiently select the valid regions before extracting the edge pixels, thereby being beneficial for more accurate identification result.

For the third scenario, when the quantity of target regions is more than one and the quantity of target regions does not exceed the preset value, selecting at least a portion of other regions in the target image, which have not been selected, as new target regions is repeatedly performed until the quantity of repeated executions exceeds the second preset value. That is, in order to prevent the program from always being unable to select a valid region (for example, most of the target image is blank and the valid regions are insufficient) which may result in the program to take extremely long to run and low processing efficiency, the quantity of repeated executions is configured in one embodiment. If the quantity of repeated executions reaches the second preset value, the search for the valid region may be stopped. Subsequently, edge pixel extraction may be performed on determined valid regions to quickly output the identification result of the generation source. In addition, subsequent step of determining the generation source of the target image may not be performed, but the user may be prompted that accurate identification result cannot be obtained according to the target image, which may avoid outputting inaccurate identification result according to insufficient quantity of valid regions.

The present invention has the following beneficial effects. The chromas of the edge pixels may be configured to determine the image source, which improves image-processing efficiency; different preset values may be configured for different target images, which improves the versatility of image source determination; and the plurality of non-adjacent blocks that are scattered and arranged in the target image may be obtained to improve the accuracy of image source determination.

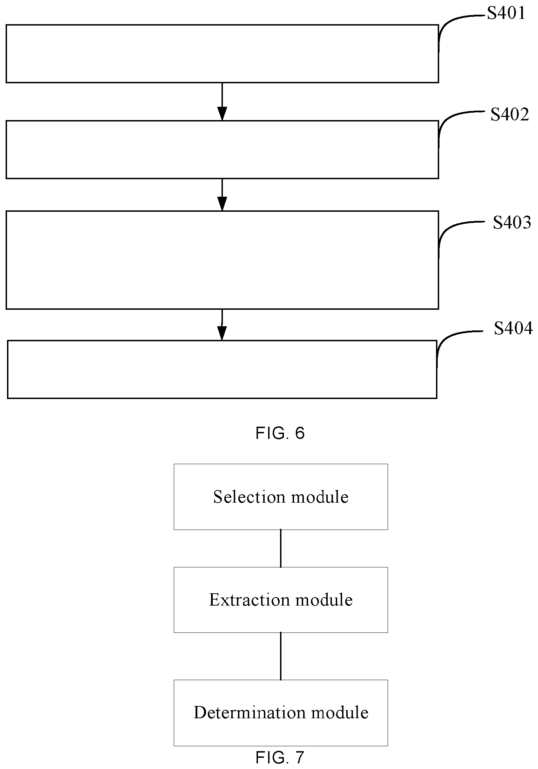

Referring to FIG. 6, FIG. 6 illustrates another flowchart of an image source determination method provided by exemplary embodiments of the present invention. The image source determination method may include following exemplary steps.

At S401, at least a portion of the target image is selected as the target region.

At S402, when the selected target region is the valid region, edge pixels in the target region are extracted.

Herein, S401 and S402 may be consistent with above-mentioned S301 and S302, which not be described in detail herein.

At S403, the quantity of chromas of the edge pixels is compared with the first preset value to determine the generation source of the target region.

Herein, the obtaining manner of the quantity of chromas of the edge pixels and the configuration manner of the first preset value comparison may be consistent with above-mentioned S303, which may not be described in detail herein.

Different from S303, in exemplary step S403, it determines whether the quantities of chromas of the target regions are all less than the first preset value.

If the quantities of chromas of the target regions are all less than the first preset value, the generation source of the target region may be determined to be generated through the digital manner; and/or if the quantities of chromas of the target regions are not all less than the first preset value, the generation source of the target region may be determined to be generated through the scanning manner. The quantity of target regions may be one or more. Herein, it may independently determine whether the target region is generated through the digital manner, or whether the target region is generated through the scanning manner.

At S404, the generation source of the target image may be determined using the identification result of the generation source of the target region.

In some embodiments, only whether the target region is generated through the digital manner may be determined in exemplary step S403. If each of the selected target regions is generated through the digital manner, it determines that the target image may be generated through the digital manner. In some embodiments, only whether the target region is generated through the scanning manner may be determined in exemplary step S403. If there is a target region in the selected target region generated through the scanning manner, it determines that the target image may be generated through the scanning manner.

In some other embodiments, it simultaneously determines whether the generation source of the target region is generated through the digital manner or the scanning manner. If each of the selected target regions is generated through the digital manner, the selected target image may be generated through the digital manner. If each of the selected target regions is generated through the scanning manner, the selected target image may be generated through the scanning manner.

In addition, invalid regions may be in the target regions selected. It is assumed that the quantity of selected target regions is 7, and invalid regions may be in the seven target regions, so that the operation of extracting the edge pixels in the invalid regions may not determine the generation source of the target image using the quantity of chromas of the edge pixels. Herein, to accurately determine the generation source of the image, exemplary step S404 may include, if all selected target regions are valid regions or the times of selecting at least a portion of the target image as the target region exceeds the second preset value, determining the generation source of the target image may be executed using the target region source determination result. Otherwise, selecting at least a portion of the target image as the target region may be performed. It may be understood that all selected target regions are valid regions or the times of selecting at least a portion of the target image as the target region exceeds the second preset value, it determines that the selected target region can be configured to obtain the generation source of the target image. The selected target region may be configured to obtain the generation source of the target image; otherwise, the target region may be re-selected.

As disclosed above, the manner of re-selecting the target region may be re-selecting the blocks of the target image or re-dividing the target image into blocks. Herein, in order to prevent the target image from being unable to select a sufficient quantity of valid target regions and causing the program to fail termination, another termination condition may be configured herein, that is, whether the times of selecting at least a portion of the target image as the target region exceeds the second preset value may be performed.

Exemplarily, if the target region is obtained twice during the process of determining the generation source of the target image, it determines that a sufficient quantity of valid target regions may not be determined from the target image. Therefore, using the target region source determination result to determine the generation source of the target image may be performed, which may be configured as the determination result of the generation source of the target image.

It should be understood that, on the premise that the quantity of selecting at least a portion of the target image as the target region exceeds the second preset value, if only one target region is selected and the target region is valid, using the target region source determination result to determine the generation source of the target image may be performed; otherwise, selecting at least a portion of the target image as the target region may be performed.

FIG. 7 illustrates a schematic of an image source determination apparatus provided by exemplary embodiments of the present invention. The image source determination apparatus may include a selection module, an extraction module and a determination module. The selection module may be configured to select at least a portion of the target image as the target region. The extraction module may be configured to extract the edge pixels in the target region when the target region is a valid region. The determination module may be configured to determine the generation source of the image according to the chromas of the edge pixels of the target region.

The determination module may include a comparison unit configured to compare the quantity of chromas of the edge pixels with the first preset value; and a determination unit configured to determine the generation source of the target region using the comparison result of comparing the quantity of chromas of the edge pixels with the first preset value.

In an optional implementation manner, the statistical result of the chromaticity histogram of the edge pixels may be configured to determine the quantity of chromas of the quantity of edge pixels or perform the chroma channel gradient calculation on the edge pixels to determine the quantity of chromas.

In an optional implementation manner, the chromaticity histogram of the edge pixels may be the CbCr chromaticity histogram; the statistical result of the CbCr chromaticity histogram of the edge pixels may include the NumCb value statistical result and the NumCr values statistical result; and determining the quantity of chromas of the edge pixels through the statistical result of the CbCr chromaticity histogram of the edge pixels may include determining the quantity of chromas of the edge pixels according to the NumCb value statistical result and/or the NumCr value statistical result. The NumCb value represents the quantity of Cb values in the CbCr chromaticity histogram of the edge pixels; the NumCr value represents the quantity of Cr values in the CbCr chromaticity histogram of the edge pixels.

The determination unit may include the determination subunit, configured to determine whether the quantity of chromas of each target region is less than the first preset value. If the quantity of chromas of each target region is less than the first preset value, the generation source of the image may be generated through the digital manner; and/or if the quantity of chromas of each target region is not less than the first preset value, the generation source of the image may be generated through the scanning manner. The quantity of target regions is one or more.

In an optional implementation manner, in one embodiment, the image source determination apparatus may further include the first determination module. The first determination module may be configured to, if all selected target regions are valid regions or the times of selecting at least a portion of the target image as the target region exceeds the second preset value, determine the generation source of the target image may be executed using the target region source determination result. Otherwise, select at least a portion of the target image as the target region may be performed.

In an optional implementation manner, the image source determination apparatus may further include the second determination module. The second determination module may be configured to determine whether the selected target region satisfies a preset condition. If the present condition is satisfied, the target region may be a valid region; and if the present condition is not satisfied, the target region may be an invalid region. The preset condition may include whether there are edge pixels in the selected target region, and whether the proportion of black pixels and white pixels in the edge pixels is greater than the third preset value.

In an optional implementation manner, the proportion of black pixels and white pixels may be determined according to the brightness feature of the target region.

In an optional implementation manner, the chromaticity feature of the target region may be determined according to the statistical result of the chromaticity histogram of the target region.

In an optional implementation manner, the statistical result of the brightness histogram of the target region may include Num1 configured to indicate the quantity of black pixels in the target region, Num2 configured to indicate the quantity of white pixels in the target region, and Num3 configured to indicate the quantity of all pixels in the target region. If the ratio of the sum of Num1 and Num2 to Num3 is greater than the fourth preset value, the proportion of black pixels and white pixels in the pixels in the target region may be determined to be greater than the third preset value.

In an optional implementation manner, the edge extraction algorithm (operation) may be configured to determine the edge pixels.

In an optional implementation manner, the first preset value may be determined according to the background color and the foreground color of the target image, where the foreground color may include character color.

In an optional implementation manner, when one of the background color and the foreground color is black and another one of the background color and the foreground color is white, the first preset value may be 2, 3 or 4; and/or when one of the background color and the foreground color is a single color with a color deviation from black within a preset range, and another one of the background color and the foreground color is a single color with a color deviation from white within a preset range, the first preset value may be configured to be 4.

The image source determination apparatus provided by embodiments in FIG. 7 may be configured to execute the technical solutions of method embodiments shown in FIGS. 3-6 of the present invention; and the implementation principle and technical effect of the image source determination apparatus may refer to relevant description in method embodiments.

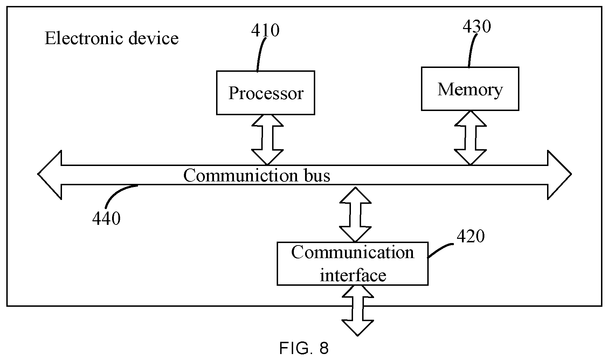

FIG. 8 illustrates a structural schematic of an electronic device provided by exemplary embodiments of the present invention. As shown in FIG. 8, above-mentioned electronic device may include at least one processor; and at least one memory communicatively connected with above-mentioned processor. The memory may store program instructions capable of being executed by the processor. The processor may call the program instructions to execute the image source determination method provided by embodiments shown in FIGS. 3-6 of the present invention.

Above-mentioned electronic device may be a device capable of intelligent dialogue with the user, such as a cloud server. Specific form of above-mentioned electronic device may not be limited in embodiments of the present invention. It may be understood that the electronic device herein may be the apparatus mentioned in method embodiments.

FIG. 8 illustrates a block diagram of an exemplary electronic device suitable for implementing embodiments of the present invention. The electronic device shown in FIG. 8 may be only an example and should not limit the function and use scope of embodiments of the present invention.

As shown in FIG. 8, the electronic device may be embodied as a general computing device. The components of the electronic device may include, but may not be limited to, one or more processors 410, a memory 430, and a communication bus 440 for connecting different system components (including the memory 430 and the processor 410).

The communications bus 440 may represent one or more of a plurality of types of bus structures, which may include a memory bus or a memory controller, a peripheral bus, a graphics accelerated port, a processor, or a local bus using any bus structure. For example, above-mentioned bus structures may include, but may not be limited to, an industry standard architecture (ISA) bus, a micro channel architecture (MAC) bus, an enhanced ISA bus, a video electronics standards association (VESA) local bus and a peripheral component interconnection (PCI) bus.

The electronic devices may include a plurality of computer system readable media. Above-mentioned media may be any available media capable of being accessed by the electronic device, which may include volatile and nonvolatile media, and removable and non-removable media.

The memory 430 may include computer system readable media in the form of volatile memory, such as random access memory (RAM) and/or cache memory. The electronic device may further include other removable/non-removable, volatile/non-volatile computer system storage media. The memory 430 may include at least one program product having a set of (e.g., at least one) program modules. The program modules may be configured to perform the functions of various embodiments of the present invention.

A program/utility having a set of (at least one) program modules may be stored in the memory 430. Above-mentioned program modules may include, but may not be limited to, an operating system, one or more application programs, other program modules, and program data. Each or a combination of above-mentioned embodiments/examples may include the implementation of a network environment. The program modules may perform functions and/or methods in above-mentioned embodiments of the present invention.

The processor 410 may execute various functional applications and data processing by running programs stored in the memory 430, for example, may implement the image source determination method provided by embodiments in FIGS. 1-3 of the present invention.

Embodiments of the present invention provide a non-transitory computer-readable storage medium. The non-transitory computer-readable storage medium may store computer instructions. The computer instructions may cause the computer to execute the image source determination method provided by embodiments in FIGS. 3-6 of the present invention.

Above-mentioned non-transitory computer-readable storage medium may adopt any combination of one or more computer-readable media. The computer-readable medium may be a computer-readable signal medium or a computer-readable storage medium. The computer-readable storage medium may be, for example, but may not be limited to, an electrical, magnetic, optical, electromagnetic, infrared, or semiconductor system, apparatus or device, or a combination thereof. Moreover, examples (non-exhaustive list) of the computer readable storage media may include an electrical connection having one or more conductors, a portable computer disk, a hard drive, random access memory (RAM), a read only memory (ROM), an erasable programmable read only memory (EPROM) or a flash memory, an optical fiber, a portable compact disk read-only memory (CD-ROM), an optical storage device, a magnetic storage device, or a combination thereof. In the present invention, the computer-readable storage medium may be any tangible medium which may contain or store a program. The program may be used by an instruction execution system, apparatus, device, or a combination thereof.

The computer-readable signal medium may include a data signal propagated in baseband or as a portion of a carrier wave which may carry computer-readable program code. Such propagated data signal may take a variety of forms, which may include, but may not be limited to, an electromagnetic signal, an optical signal, or a combination thereof. The computer-readable signal media may also be any computer-readable media other than the computer-readable storage media. The computer-readable medium may send, propagate, or transport the program used by an instruction execution system, apparatus, device, or a combination thereof.

Program code contained in the computer-readable medium may be transmitted using any appropriate medium, which may include, but may not be limited to, a wireless medium, a wire line, an optical fiber cable, RF, or a combination thereof.

Computer program code for performing operations of embodiments of the invention may be written using one or more programming languages, or a combination thereof. The programming languages may include object-oriented programming languages such as Java, Smalltalk, C++, and conventional procedural programming languages such as the "C" language or similar programming language. The program code may be executed entirely on the user's computer, partly on the user's computer, as a stand-alone software package, and may be executed partly on the user's computer and partly on a remote computer, or entirely on the remote computer or server. In the case of the remote computer, the remote computer may be connected to the user's computer through any kind of network, including a local region network (LAN) or a wide region network (WAN), or may be connected to an external computer, for example, through an Internet service provider via the Internet).

Various embodiments of the present invention are described above. Other embodiments are within the scope of appended claims. In some cases, the operations or steps in the claims may be performed in a different order than in embodiments and still achieve desired result. Furthermore, the processes depicted in the drawings may not necessarily require specific order or sequential order to achieve desired result. In some embodiments, multitasking and parallel processing may be also possible or beneficial.

Any process or method descriptions in flowcharts or otherwise described herein may be understood to represent modules, blocks, or portions of code that include one or more executable instructions for implementing customized logical functions or steps of the process. In addition, the scope of optional embodiments of the present invention may include other implementations in which functions may be performed out of the order shown or discussed, including in a substantially simultaneous manner or in reverse order according to functionality involved. The scope should be understood by those skilled in the art according to embodiments of the present invention.

In addition, each functional unit in each embodiment of the present invention may be integrated into one processing unit, or each unit may exist physically alone, or two or more units may be integrated into one unit. Above-mentioned integrated unit may be implemented in the form of hardware or in the form of hardware plus software functional units.

Above-mentioned integrated unit implemented in the form of the software functional unit may be stored in a computer-readable storage medium. Above-mentioned software functional units may be stored in a storage medium and include a plurality of instructions to cause a computer device (which may be a personal computer, a server, a network device or the like) or a processor to execute some steps of above-mentioned method described in each embodiment of the present invention. Above-mentioned storage media may include various media for storing program code, such as a U disk, a mobile hard disk, a read-only memory (ROM), a random access memory (RAM), a magnetic disk, an optical disk and/or the like.

Compared with the existing technology, the technical solutions provided by the present invention may achieve at least following beneficial effects.

The chromas of the edge pixels may be configured to determine the image source, which improves image-processing efficiency; different preset values may be configured for different target images, which improves the versatility of image source determination; and the plurality of non-adjacent blocks that are scattered and arranged in the target image may be obtained to improve the accuracy of image source determination.

The above may be only optional embodiments of the present invention and may not intended to limit the present invention.

## Claims

1. An image source determination method, comprising:
selecting (S301, S401) at least a portion of a target image as a target region (22, 28, 53, 55, 75, 82, 88);
when the target region (22, 28, 53, 55, 75, 82, 88) is a valid region, extracting (S302, S402) edge pixels in the target region; and **characterised in that**:
determining a generation source of the target image according to a quantity of chromas of the edge pixels in the target region (22, 28, 53, 55, 75, 82, 88), wherein
when a quantity of target regions (22, 28, 53, 55, 75, 82, 88) is more than one and a quantity of target regions (22, 28, 53, 55, 75, 82, 88) in the valid region exceeds a preset value, extracting edge pixels in the target regions (22, 28, 53, 55, 75, 82, 88) is performed; or
when a quantity of target regions (22, 28, 53, 55, 75, 82, 88) is more than one and a quantity of target regions (22, 28, 53, 55, 75, 82, 88) in the valid region does not exceed a preset value, at least a portion of unselected regions in the target image is selected as a new target region (22, 28, 53, 55, 75, 82, 88) until the quantity of target regions (22, 28, 53, 55, 75, 82, 88) in the valid region exceeds the preset value; or
when a quantity of target regions (22, 28, 53, 55, 75, 82, 88) is more than one and a quantity of target regions (22, 28, 53, 55, 75, 82, 88) in the valid region does not exceed a preset value, selecting at least a portion of unselected regions in the target image as a new target region (22, 28, 53, 55, 75, 82, 88) is executed repeatedly until a quantity of repeated executions exceeds a second preset value.

2. The method according to claim 1, wherein determining the generation source of the target image according to the quantity of chromas of the edge pixels in the target region (22, 28, 53, 55, 75, 82, 88) includes:
comparing (S303, S403) the quantity of chromas of the edge pixels with a first preset value and determining the generation source of the target image according to a comparison result.

3. The method according to claim 1, wherein:
the quantity of chromas of the edge pixels is determined by a statistical result of a chromaticity histogram of the edge pixels or by performing a chroma channel gradient calculation on the edge pixels.

4. The method according to claim 3, wherein:
the chromaticity histogram is a CbCr chromaticity histogram;
a statistical result of the CbCr chromaticity histogram of the edge pixels includes a statistical result of NumCb values and a statistical result of NumCr values; and
determining the quantity of chromas of the edge pixels through the statistical result of the CbCr chromaticity histogram of the edge pixels includes determining the quantity of chromas of the edge pixels according to the statistical result of the NumCb values and/or the statistical result of the NumCr values, wherein:
the statistical result of the NumCb values is configured to indicate a quantity of Cb values in the CbCr chromaticity histogram of the edge pixels; and the statistical result of the NumCr values is configured to indicate a quantity of Cr values in the CbCr chromaticity histogram of the edge pixels.

5. The method according to claim 2, wherein determining the generation source of the target image according to the comparison result includes:
determining (S403) whether a quantity of chromas of each target region (22, 28, 53, 55, 75, 82, 88) is less than the first preset value;
if the quantity of chromas of each target region (22, 28, 53, 55, 75, 82, 88) is less than the first preset value, determining that the generation source of the target image is generated through a digital manner; and/or
if the quantity of chromas of each target region (22, 28, 53, 55, 75, 82, 88) is not less than the first preset value, determining that the generation source of the target image is generated through a scanning manner, wherein a quantity of target regions (22, 28, 53, 55, 75, 82, 88) is one or more.

6. The method according to claim 1, wherein:
when the target region (22, 28, 53, 55, 75, 82, 88) is an invalid region, at least a portion of unselected regions in the target image is selected as a new target region (22, 28, 53, 55, 75, 82, 88).

7. The method according to claim 1, further including:
determining whether a proportion of black pixels and white pixels in the target region (22, 28, 53, 55, 75, 82, 88) is greater than a third preset value; if the proportion of the black pixels and the white pixels in the target region (22, 28, 53, 55, 75, 82, 88) is greater than the third preset value, determining the target region (22, 28, 53, 55, 75, 82, 88) as the valid region; and if the proportion of the black pixels and the white pixels in the target region (22, 28, 53, 55, 75, 82, 88) is not greater than the third preset value, determining the target region (22, 28, 53, 55, 75, 82, 88) as an invalid region.

8. The method according to claim 7, wherein:
the proportion of the black pixels and the white pixels is determined through a brightness feature of the target region (22, 28, 53, 55, 75, 82, 88).

9. The method according to claim 8, wherein: the brightness feature is determined through a statistical result of a brightness histogram of the target region (22, 28, 53, 55, 75, 82, 88).

10. The method according to claim 9, wherein:
the statistical result of the brightness histogram of the target region (22, 28, 53, 55, 75, 82, 88) includes Num1 configured to indicate a quantity of the black pixels in the target region (22, 28, 53, 55, 75, 82, 88), Num2 configured to indicate a quantity of the white pixels in the target region (22, 28, 53, 55, 75, 82, 88) and Num3 configured to indicate a quantity of all pixels in the target region (22, 28, 53, 55, 75, 82, 88);
determining whether the proportion of the black pixels and the white pixels in the target region (22, 28, 53, 55, 75, 82, 88) is greater than the third preset value includes determining whether a ratio of a sum of Num1 and Num2 to Num3 is greater than a fourth preset value; and
if the ratio of the sum of Num1 and Num2 to Num3 is greater than the fourth preset value, the proportion of the black pixels and the white pixels in the target region (22, 28, 53, 55, 75, 82, 88) is determined to be greater than the third preset value.

11. The method according to claim 2, wherein:
the first preset value is determined according to a background color and a foreground color of the target image, and the foreground color includes a character color.

12. The method according to claim 1, wherein selecting the at least the portion of the target image as the target region (22, 28, 53, 55, 75, 82, 88) includes:
dividing the target image into blocks and selecting at least one block as the target region (22, 28, 53, 55, 75, 82, 88).

13. An image source determination apparatus, comprising:
a memory (430) storing program instructions; and
a processor (410) communicatively coupled to the memory (430) and, when the program instructions being executed, configured to perform an image source determination method of any one of claims 1 to 12.

14. A non-transitory computer-readable storage medium containing a stored program, that when being executed, causes a device where the non-transitory computer-readable storage medium is located to execute an image source determination method of any one of claims 1 to 12.

## Patentansprüche

1. Verfahren zur Bestimmung einer Bildquelle, umfassend:
Auswählen (S301, S401) von mindestens einem Teil eines Zielbildes als Zielbereich (22, 28, 53, 55, 75, 82, 88);
wenn der Zielbereich (22, 28, 53, 55, 75, 82, 88) ein gültiger Bereich ist, Extrahieren (S302, S402) von Kantenpixeln in dem Zielbereich; und **dadurch gekennzeichnet, dass**:
Bestimmen einer Erzeugungsquelle des Zielbildes gemäß einer Anzahl von Chrominanzen der Kantenpixel in dem Zielbereich (22, 28, 53, 55, 75, 82, 88), wobei
wenn eine Anzahl von Zielbereichen (22, 28, 53, 55, 75, 82, 88) größer als eins ist und eine Anzahl von Zielbereichen (22, 28, 53, 55, 75, 82, 88) im gültigen Bereich einen vorbestimmten Wert überschreitet, das Extrahieren von Kantenpixeln in den Zielbereichen (22, 28, 53, 55, 75, 82, 88) durchgeführt wird; oder
wenn eine Anzahl von Zielbereichen (22, 28, 53, 55, 75, 82, 88) größer als eins ist und eine Anzahl von Zielbereichen (22, 28, 53, 55, 75, 82, 88) im gültigen Bereich den vorbestimmten Wert nicht überschreitet, mindestens ein Teil nicht ausgewählter Bereiche im Zielbild als neuer Zielbereich (22, 28, 53, 55, 75, 82, 88) ausgewählt wird, bis die Anzahl von Zielbereichen (22, 28, 53, 55, 75, 82, 88) im gültigen Bereich den vorbestimmten Wert überschreitet; oder
wenn eine Anzahl von Zielbereichen (22, 28, 53, 55, 75, 82, 88) größer als eins ist und eine Anzahl von Zielbereichen (22, 28, 53, 55, 75, 82, 88) im gültigen Bereich den vorbestimmten Wert nicht überschreitet, das Auswählen von mindestens einem Teil nicht ausgewählter Bereiche im Zielbild als neuer Zielbereich (22, 28, 53, 55, 75, 82, 88) wiederholt ausgeführt wird, bis eine Anzahl wiederholter Ausführungen einen zweiten vorbestimmten Wert überschreitet.

2. Verfahren nach Anspruch 1, wobei das Bestimmen der Erzeugungsquelle des Zielbildes gemäß der Anzahl von Chrominanzen der Kantenpixel in dem Zielbereich (22, 28, 53, 55, 75, 82, 88) Folgendes umfasst:
Vergleichen (S303, S403) der Anzahl von Chrominanzen der Kantenpixel mit einem ersten vorbestimmten Wert und Bestimmen der Erzeugungsquelle des Zielbildes gemäß einem Vergleichsergebnis.

3. Verfahren nach Anspruch 1, wobei:
die Anzahl von Chrominanzen der Kantenpixel durch ein statistisches Ergebnis eines Chrominanzhistogramms der Kantenpixel oder durch Durchführen einer Chromakanal-Gradientenberechnung an den Kantenpixeln bestimmt wird.

4. Verfahren nach Anspruch 3, wobei:
das Chrominanzhistogramm ein CbCr-Chrominanzhistogramm ist;
ein statistisches Ergebnis des CbCr-Chrominanzhistogramms der Kantenpixel ein statistisches Ergebnis von NumCb-Werten und ein statistisches Ergebnis von NumCr-Werten umfasst; und
das Bestimmen der Anzahl von Chrominanzen der Kantenpixel anhand des statistischen Ergebnisses des CbCr-Chrominanzhistogramms der Kantenpixel das Bestimmen der Anzahl von Chrominanzen der Kantenpixel gemäß dem statistischen Ergebnis der NumCb-Werte und/oder dem statistischen Ergebnis der NumCr-Werte umfasst, wobei:
das statistische Ergebnis der NumCb-Werte dazu eingerichtet ist, eine Anzahl von Cb-Werten im CbCr-Chrominanzhistogramm der Kantenpixel anzuzeigen; und das statistische Ergebnis der NumCr-Werte dazu eingerichtet ist, eine Anzahl von Cr-Werten im CbCr-Chrominanzhistogramm der Kantenpixel anzuzeigen.

5. Verfahren nach Anspruch 2, wobei das Bestimmen der Erzeugungsquelle des Zielbildes gemäß dem Vergleichsergebnis Folgendes umfasst:
Bestimmen (S403), ob eine Anzahl von Chrominanzen jedes Zielbereichs (22, 28, 53, 55, 75, 82, 88) kleiner ist als der erste vorbestimmte Wert;
wenn die Anzahl von Chrominanzen jedes Zielbereichs (22, 28, 53, 55, 75, 82, 88) kleiner ist als der erste vorbestimmte Wert, Bestimmen, dass die Erzeugungsquelle des Zielbildes auf digitalem Wege erzeugt ist; und/oder
wenn die Anzahl von Chrominanzen jedes Zielbereichs (22, 28, 53, 55, 75, 82, 88) nicht kleiner ist als der erste vorbestimmte Wert, Bestimmen, dass die Erzeugungsquelle des Zielbildes durch Scannen erzeugt ist, wobei eine Anzahl von Zielbereichen (22, 28, 53, 55, 75, 82, 88) eins oder mehr ist.

6. Verfahren nach Anspruch 1, wobei:
wenn der Zielbereich (22, 28, 53, 55, 75, 82, 88) ein ungültiger Bereich ist, mindestens ein Teil nicht ausgewählter Bereiche im Zielbild als neuer Zielbereich (22, 28, 53, 55, 75, 82, 88) ausgewählt wird.

7. Verfahren nach Anspruch 1, ferner umfassend:
Bestimmen, ob ein Anteil schwarzer Pixel und weißer Pixel im Zielbereich (22, 28, 53, 55, 75, 82, 88) größer ist als ein dritter vorbestimmter Wert; falls der Anteil der schwarzen Pixel und der weißen Pixel im Zielbereich (22, 28, 53, 55, 75, 82, 88) größer ist als der dritte vorbestimmte Wert, Bestimmen des Zielbereichs (22, 28, 53, 55, 75, 82, 88) als den gültigen Bereich; und falls der Anteil der schwarzen Pixel und der weißen Pixel im Zielbereich (22, 28, 53, 55, 75, 82, 88) nicht größer ist als der dritte vorbestimmte Wert, Bestimmen des Zielbereichs (22, 28, 53, 55, 75, 82, 88) als einen ungültigen Bereich.

8. Verfahren nach Anspruch 7, wobei:
der Anteil der schwarzen Pixel und der weißen Pixel durch ein Helligkeitsmerkmal des Zielbereichs (22, 28, 53, 55, 75, 82, 88) bestimmt wird.

9. Verfahren nach Anspruch 8, wobei:
das Helligkeitsmerkmal durch ein statistisches Ergebnis eines Helligkeitshistogramms des Zielbereichs (22, 28, 53, 55, 75, 82, 88) bestimmt wird.

10. Verfahren nach Anspruch 9, wobei:
das statistische Ergebnis des Helligkeitshistogramms des Zielbereichs (22, 28, 53, 55, 75, 82, 88) Num1, das dazu eingerichtet ist, eine Anzahl der schwarzen Pixel im Zielbereich (22, 28, 53, 55, 75, 82, 88) anzuzeigen, Num2, das dazu eingerichtet ist, eine Anzahl der weißen Pixel im Zielbereich (22, 28, 53, 55, 75, 82, 88) anzuzeigen, und Num3, das dazu eingerichtet ist, eine Anzahl aller Pixel im Zielbereich (22, 28, 53, 55, 75, 82, 88) anzuzeigen, umfasst;
das Bestimmen, ob der Anteil der schwarzen Pixel und der weißen Pixel im Zielbereich (22, 28, 53, 55, 75, 82, 88) größer ist als der dritte vorbestimmte Wert, umfasst das Bestimmen, ob ein Verhältnis einer Summe aus Num1 und Num2 zu Num3 größer ist als ein vierter vorbestimmter Wert; und
wenn das Verhältnis der Summe aus Num1 und Num2 zu Num3 größer ist als der vierte vorbestimmte Wert, wird bestimmt, dass der Anteil der schwarzen Pixel und der weißen Pixel im Zielbereich (22, 28, 53, 55, 75, 82, 88) größer ist als der dritte vorbestimmte Wert.

11. Verfahren nach Anspruch 2, wobei:
der erste vorbestimmte Wert gemäß einer Hintergrundfarbe und einer Vordergrundfarbe des Zielbildes bestimmt wird, wobei die Vordergrundfarbe eine Zeichenfarbe umfasst.

12. Verfahren nach Anspruch 1, wobei das Auswählen des mindestens einen Teils des Zielbildes als Zielbereich (22, 28, 53, 55, 75, 82, 88) Folgendes umfasst:
Unterteilen des Zielbildes in Blöcke und Auswählen von mindestens einem Block als Zielbereich (22, 28, 53, 55, 75, 82, 88).

13. Bildquellen-Bestimmungsvorrichtung, umfassend:
einen Speicher (430), der Programmanweisungen speichert; und
einen Prozessor (410), der mit dem Speicher (430) in Kommunikationsverbindung steht und, wenn die Programmanweisungen ausgeführt werden, dazu eingerichtet ist, ein Bildquellenbestimmungsverfahren nach einem der Ansprüche 1 bis 12 auszuführen.

14. Nichtflüchtiges, computerlesbares Speichermedium, das ein gespeichertes Programm enthält, das bei Ausführung bewirkt, dass eine Vorrichtung, in der sich das nichtflüchtige, computerlesbare Speichermedium befindet, ein Bildquellenbestimmungsverfahren nach einem der Ansprüche 1 bis 12 ausführt.

## Revendications

1. Procédé de détermination d'une source d'image, comprenant :
sélectionner (S301, S401) au moins une partie d'une image cible en tant que région cible (22, 28, 53, 55, 75, 82, 88) ;
lorsque la région cible (22, 28, 53, 55, 75, 82, 88) est une région valide, extraire (S302, S402) des pixels de bord dans la région cible ; et **caractérisé en ce que** :
déterminer une source de génération de l'image cible en fonction d'une quantité de chrominances des pixels de bord dans la région cible (22, 28, 53, 55, 75, 82, 88), dans lequel
lorsque une quantité de régions cibles (22, 28, 53, 55, 75, 82, 88) est supérieure à un, et qu'une quantité de régions cibles (22, 28, 53, 55, 75, 82, 88) dans la région valide dépasse une valeur prédéfinie, l'extraction de pixels de bord dans les régions cibles (22, 28, 53, 55, 75, 82, 88) est effectuée ; ou
lorsque une quantité de régions cibles (22, 28, 53, 55, 75, 82, 88) est supérieure à un et qu'une quantité de régions cibles (22, 28, 53, 55, 75, 82, 88) dans la région valide ne dépasse pas la valeur prédéfinie, au moins une partie de régions non sélectionnées de l'image cible est sélectionnée en tant que nouvelle région cible (22, 28, 53, 55, 75, 82, 88) jusqu'à ce que la quantité de régions cibles (22, 28, 53, 55, 75, 82, 88) dans la région valide dépasse ladite valeur prédéfinie ; ou
lorsque une quantité de régions cibles (22, 28, 53, 55, 75, 82, 88) est supérieure à un et qu'une quantité de régions cibles (22, 28, 53, 55, 75, 82, 88) dans la région valide ne dépasse pas la valeur prédéfinie, la sélection d'au moins une partie de régions non sélectionnées de l'image cible en tant que nouvelle région cible (22, 28, 53, 55, 75, 82, 88) est exécutée de manière répétée jusqu'à ce qu'un nombre d'exécutions répétées dépasse une deuxième valeur prédéfinie.

2. Procédé selon la revendication 1, dans lequel la détermination de la source de génération de l'image cible en fonction de la quantité de chrominances des pixels de bord dans la région cible (22, 28, 53, 55, 75, 82, 88) comprend :
comparer (S303, S403) la quantité de chrominances des pixels de bord avec une première valeur prédéfinie et déterminer la source de génération de l'image cible selon un résultat de comparaison.

3. Procédé selon la revendication 1, dans lequel :
la quantité de chrominances des pixels de bord est déterminée par un résultat statistique d'un histogramme de chrominance des pixels de bord ou par l'exécution d'un calcul de gradient de canal chroma sur les pixels de bord.

4. Procédé selon la revendication 3, dans lequel :
l'histogramme de chrominance est un histogramme de chrominance CbCr ;
un résultat statistique de l'histogramme de chrominance CbCr des pixels de bord comprend un résultat statistique de valeurs NumCb et un résultat statistique de valeurs NumCr ; et
déterminer la quantité de chrominances des pixels de bord au moyen du résultat statistique de l'histogramme de chrominance CbCr des pixels de bord comprend de déterminer la quantité de chrominances des pixels de bord selon le résultat statistique des valeurs NumCb et/ou le résultat statistique des valeurs NumCr, dans lequel :
le résultat statistique des valeurs NumCb est configuré pour indiquer une quantité de valeurs Cb dans l'histogramme de chrominance CbCr des pixels de bord ; et le résultat statistique des valeurs NumCr est configuré pour indiquer une quantité de valeurs Cr dans l'histogramme de chrominance CbCr des pixels de bord.

5. Procédé selon la revendication 2, dans lequel la détermination de la source de génération de l'image cible selon le résultat de comparaison comprend :
déterminer (S403) si une quantité de chrominances de chaque région cible (22, 28, 53, 55, 75, 82, 88) est inférieure à la première valeur prédéfinie ;
si la quantité de chrominances de chaque région cible (22, 28, 53, 55, 75, 82, 88) est inférieure à la première valeur prédéfinie, déterminer que la source de génération de l'image cible est générée de manière numérique ; et/ou
si la quantité de chrominances de chaque région cible (22, 28, 53, 55, 75, 82, 88) n'est pas inférieure à la première valeur prédéfinie, déterminer que la source de génération de l'image cible est générée par numérisation, une quantité de régions cibles (22, 28, 53, 55, 75, 82, 88) étant égale à un ou supérieure.

6. Procédé selon la revendication 1, dans lequel :
lorsque la région cible (22, 28, 53, 55, 75, 82, 88) est une région invalide, au moins une partie de régions non sélectionnées de l'image cible est sélectionnée en tant que nouvelle région cible (22, 28, 53, 55, 75, 82, 88).

7. Procédé selon la revendication 1, comprenant en outre :
déterminer si une proportion de pixels noirs et de pixels blancs dans la région cible (22, 28, 53, 55, 75, 82, 88) est supérieure à une troisième valeur prédéfinie ; si la proportion de pixels noirs et de pixels blancs dans la région cible (22, 28, 53, 55, 75, 82, 88) est supérieure à la troisième valeur prédéfinie, déterminer la région cible (22, 28, 53, 55, 75, 82, 88) comme étant la région valide ; et si la proportion de pixels noirs et de pixels blancs dans la région cible (22, 28, 53, 55, 75, 82, 88) n'est pas supérieure à la troisième valeur prédéfinie, déterminer la région cible (22, 28, 53, 55, 75, 82, 88) comme étant une région invalide.

8. Procédé selon la revendication 7, dans lequel :
la proportion des pixels noirs et des pixels blancs est déterminée au moyen d'une caractéristique de luminance de la région cible (22, 28, 53, 55, 75, 82, 88).

9. Procédé selon la revendication 8, dans lequel :
la caractéristique de luminance est déterminée au moyen d'un résultat statistique d'un histogramme de luminance de la région cible (22, 28, 53, 55, 75, 82, 88).

10. Procédé selon la revendication 9, dans lequel :
le résultat statistique de l'histogramme de luminance de la région cible (22, 28, 53, 55, 75, 82, 88) comprend Num1 configuré pour indiquer une quantité de pixels noirs dans la région cible (22, 28, 53, 55, 75, 82, 88), Num2 configuré pour indiquer une quantité de pixels blancs dans la région cible (22, 28, 53, 55, 75, 82, 88) et Num3 configuré pour indiquer une quantité de tous les pixels dans la région cible (22, 28, 53, 55, 75, 82, 88) ;
déterminer si la proportion des pixels noirs et des pixels blancs dans la région cible (22, 28, 53, 55, 75, 82, 88) est supérieure à la troisième valeur prédéfinie comprend de déterminer si un rapport d'une somme de Num1 et Num2 à Num3 est supérieur à une quatrième valeur prédéfinie ; et
si le rapport de la somme de Num1 et Num2 à Num3 est supérieur à la quatrième valeur prédéfinie, la proportion des pixels noirs et des pixels blancs dans la région cible (22, 28, 53, 55, 75, 82, 88) est déterminée comme étant supérieure à la troisième valeur prédéfinie.

11. Procédé selon la revendication 2, dans lequel :
la première valeur prédéfinie est déterminée en fonction d'une couleur d'arrière-plan et d'une couleur d'avant-plan de l'image cible, la couleur d'avant-plan comprenant une couleur de caractère.

12. Procédé selon la revendication 1, dans lequel la sélection d'au moins la partie de l'image cible en tant que région cible (22, 28, 53, 55, 75, 82, 88) comprend :
diviser l'image cible en blocs et sélectionner au moins un bloc en tant que région cible (22, 28, 53, 55, 75, 82, 88).

13. Appareil de détermination de source d'image, comprenant :
une mémoire (430) stockant des instructions de programme ; et
un processeur (410) couplé en communication à la mémoire (430) et, lorsque les instructions de programme sont exécutées, configuré pour mettre en œuvre un procédé de détermination de source d'image selon l'une quelconque des revendications 1 à 12.

14. Support d'enregistrement lisible par ordinateur non transitoire contenant un programme stocké qui, lors de son exécution, amène un dispositif dans lequel se trouve ledit support d'enregistrement lisible par ordinateur non transitoire à exécuter un procédé de détermination de source d'image selon l'une quelconque des revendications 1 à 12.
